## Europäisches Patentamt

## European Patent Office

## Office européen des brevets

(11) Veröffentlichungsnummer : **0 184 666**
**B1**

(12) **EUROPÄISCHE PATENTSCHRIFT**

(45) Veröffentlichungstag der Patentschrift :
07.06.89

(51) Int. Cl.⁴ : **G 01 L 23/22**

(21) Anmeldenummer : **85114107.7**

(22) Anmeldetag : **06.11.85**

(54) **Klopfsensor.**

(30) Priorität : **13.12.84 DE 3445452**

(43) Veröffentlichungstag der Anmeldung :
**18.06.86 Patentblatt 86/25**

(45) Bekanntmachung des Hinweises auf die Patenterteilung : **07.06.89 Patentblatt 89/23**

(84) Benannte Vertragsstaaten :
**DE FR GB IT SE**

(56) Entgegenhaltungen :
**DE—A— 2 902 305**
**DE—A— 2 946 434**
**DE—A— 3 201 755**

(73) Patentinhaber : **ROBERT BOSCH GMBH**
**Postfach 50**
**D-7000 Stuttgart 1 (DE)**

(72) Erfinder : **Fries, Romuald, Dipl.-Ing.**
**Stuttgarter Strasse 100**
**D-7141 Schwieberdingen (DE)**
Erfinder : **Lampater, Jürgen, Dipl.-Ing. FH**
**Lange Hälden 7**
**D-7107 Nordheim (DE)**
Erfinder : **Meudt, Gottfried**
**Weiler Strasse 2**
**D-7144 Asperg (DE)**
Erfinder : **Weyl, Helmut, Dipl.-Ing.**
**Peter-von-Koblenz-Strasse 34**
**D-7141 Schwieberdingen (DE)**

## Beschreibung

### Stand der Technik

Die Erfindung geht aus von einem Klopfsensor nach der Gattung des Hauptanspruchs. Bei einem derartigen bekannten Klopfsensor ist die piezo-elektrische Scheibe zwischen zwei buchsenarti-gen Körpern angeordnet, durch deren Bohrungen die Befestigungsschraube eingeführt wird. Dabei stützt sich das durch das Anzugsmoment der Befestigungsschraube aufgebrachte Drehmoment auch auf der piezoelektrischen Scheibe ab, so daß diese unter Umständen beschädigt werden kann und in ihrer Funktion gestört wird.

### Vorteile der Erfindung

Der erfindungsgemäße Klopfsensor mit den kennzeichnenden Merkmalen des Hauptanspruchs hat demgegenüber den Vorteil, daß von der Befestigungsschraube herrührende Kräfte sich nicht mehr auf die piezoelektrische Scheibe auswirken können. Dadurch ist diese vollständig vor eventuellen Beschädigungen geschützt und auch die Meßergebnisse werden genauer.

Durch die in den Unteransprüchen aufgeführten Maßnahmen sind Weiterbildungen der im Hauptanspruch angegebenen Merkmale möglich.

### Zeichnung

Ein Ausführungsbeispiel der Erfindung ist in der Zeichnung dargestellt und in der nachfolgenden Beschreibung näher erläutert. Es zeigen Figur 1 einen Längsschnitt durch einen Klopfsensor, Figuren 2 und 3 Abwandlungen der Befestigung für Teile des Klopfsensors.

### Beschreibung des Erfindungsbeispiels

Der Klopfsensor weist ein Gehäuse 10 auf, in dem eine Druckhülse 11 angeordnet ist, die nahe ihrem unteren Ende einen flanschartigen Rand 12 aufweist. Am Außenumfang der Druckhülse ausgehend vom Rand 12 sind folgende Teile angeordnet : Eine Kontaktscheibe 13, eine piezokeramische Scheibe 14, eine Kontaktscheibe 15 und eine seismische Masse 16. Auf diese Teile wirkt eine Tellerfeder 17 ein, deren Vorspannung durch einen Gewindering 18 erzeugt wird, welcher auf ein Außengewinde 19 am oberen Teil der Druckhülse 11 aufgeschraubt ist.

In einen Fortsatz 23 des aus Kunststoff bestehenden Gehäuses 10 ist ein Kabel 24 eingespritzt, von dem Drähte 26 zu den Kontaktscheiben 13, 15 führen. Durch die Bohrung 28 der Druckhülse 11 ragt eine nicht dargestellte Befestigungsschraube, mit welcher das Gehäuse mittel- oder unmittelbar an einer Brennkraftmaschine befestigt ist. Das gesamte, von der Befestigungsschraube ausgeübte Drehmoment wird auf die Druckhülse übertragen, d. h. auf die piezokeramische Scheibe 14 wirkt keine Kraft von der Befestigungsschraube her. Durch den Gewindering 18 läßt sich die Vorspannkraft der Tellerfeder 17 so einstellen, daß an der piezokeramischen Scheibe gerade noch ohne bleibende Verschlechterung ihres elektrischen Signals ertragbare Axialkräfte wirksam sind und diese auch von thermischen Dehnungen sowie unvermeidlichen Stauchung der Druckhülse bei der Montage weitestgehend unabhängig ist. Die von der seismischen Masse 16 proportional zu den Schwingungen der Brennkraftmaschine ausgeübten Impulse werden in der piezokeramischen Scheibe in Ströme umgewandelt, die an einem entsprechenden Meßgerät abgelesen werden können.

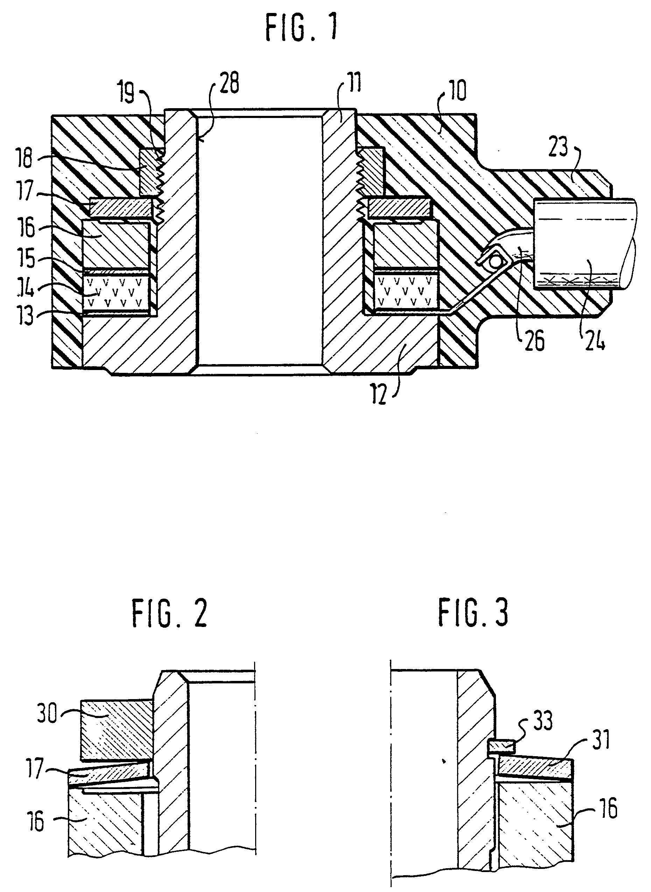

Wie die Figur 2 zeigt, ist hier anstelle des Gewinderings 18 ein Ring 30 vorgesehen, der auf die Hülse mit Preßsitz aufgebracht ist.

Wie die Figur 3 zeigt, ist hier die Tellerfeder 31, die durch einen Seegerring 33 festgehalten.

### Patentansprüche

1. Klopfsensor zur mittel- oder unmittelbaren Befestigung an einer Brennkraftmaschine mit einer in einem Gehäuse (10) zwischen zwei Kontaktscheiben angeordneten piezoelektrischen Scheibe (14), auf die eine seismische Masse (16) einwirkt, dadurch gekennzeichnet, daß die piezoelektrische Scheibe (14) und die seismische Masse (16) sowie eine auf diese Teile einwirkende Tellerfeder (17) auf einer Druckhülse (11) angeordnet sind, deren Bohrung (28) einen Durchgang für eine das Gehäuse (10) an der Brennkraftmaschine festhaltende Schraube bildet.

2. Sensor nach Anspruch 1, dadurch gekennzeichnet, daß die Hülse (11) einen flanschartigen Rand (12) aufweist, auf dem sich die piezoelektrische Scheibe und die seismische Masse abstützen.

3. Sensor nach Anspruch 1 und/oder 2, dadurch gekennzeichnet, daß die Vorspannung der Tellerfeder (17) durch einen auf die Druckhülse aufgeschraubten Gewindering (18) erzeugt ist.

4. Sensor nach einem der Ansprüche 1 bis 3, dadurch gekennzeichnet, daß die Vorspannung der Tellerfeder mit Hilfe eines auf die Druckhülse mittels Preßsitz aufgebrachten Rings (30) erzeugt ist.

5. Sensor nach einem der Ansprüche 1 bis 4, daß die Tellerfeder durch einen Seegerring festgehalten ist.

6. Sensor nach einem der Ansprüche 1 bis 5, dadurch gekennzeichnet, daß das Gehäuse (10) an die mechanischen und elektrischen Teile angespritzt ist.

### Claims

1. Knocking sensor for direct or indirect fastening to an internal-combustion engine, with a piezoelectric disc (14) which is arranged between two contact discs in a housing (10) and on which a seismic mass (16) acts, characterized in that the piezoelectric disc (14), the seismic mass (16) and a cup spring (17) acting on these parts are arranged on a pressure sleeve (11), the bore (28) of which forms a passage for a screw retaining the housing (10) on the internal-combustion engine.

2. Sensor according to Claim 1, characterized in that the sleeve (11) has a flange-like edge (12), on which the piezoelectric disc and the seismic mass are supported.

3. Sensor according to Claim 1 and/or 2, characterized in that the prestress of the cup spring (17) is generated by a threaded ring (18) screwed onto the pressure sleeve.

4. Sensor according to one of Claims 1 to 3, characterized in that the prestress of the cup spring is generated by means of a ring (30) attached onto the pressure sleeve with a press fit.

5. Sensor according to one of Claims 1 to 4, characterized in that the cup spring is retained by means of a Seeger ring.

6. Sensor according to one of Claims 1 to 5, characterized in that the housing (10) is injection-molded onto the mechanical and electrical parts.

**Revendications**

1. Détecteur de la détonation destiné à être fixé, indirectement ou directement, sur un moteur à combustion interne, comportant un disque piézoélectrique (14) disposé dans un boîtier (10) entre deux disques de contact, et sur lequel agit une masse sismique (16), détecteur caractérisé en ce que le disque piézo-électrique (14) et la masse sismique (16), ainsi qu'un ressort à disques (17) agissant sur ces éléments, sont montés sur un manchon à pression (11), dont l'alésage (28) forme un passage pour une vis fixant le boîtier (10) au moteur à combustion interne.

2. Détecteur selon la revendication 1, caractérisé en ce que le manchon (11) comporte un bord (12) du genre d'une bride, sur lequel s'appuient le disque piézo-électrique et la masse sismique.

3. Détecteur selon la revendication 1 et/ou 2, caractérisé en ce que la précontrainte du ressort à disques (17) est produite par un anneau fileté (18) vissé sur le manchon à pression.

4. Détecteur selon l'une des revendications 1 à 3, caractérisé en ce que la précontrainte du ressort à disques est produite à l'aide d'un anneau (30) appliqué par ajustage serré sur le manchon à pression.

5. Détecteur selon l'une des revendications 1 à 4, caractérisé en ce que le ressort à disques est maintenu en place au moyen d'un anneau de retenue.

6. Détecteur selon l'une des revendications 1 à 5, caractérisé en ce que le boîtier (10) est appliqué par injection sur les éléments mécaniques et électriques.

# FIG. 1

# FIG. 2

# FIG. 3